(19) **Europäisches Patentamt / European Patent Office / Office européen des brevets**

(11) **EP 3 495 702 B1**

(12) **EUROPÄISCHE PATENTSCHRIFT**

(45) Veröffentlichungstag und Bekanntmachung des Hinweises auf die Patenterteilung:
**21.02.2024  Patentblatt 2024/08**

(21) Anmeldenummer: **18206438.6**

(22) Anmeldetag: **15.11.2018**

(51) Internationale Patentklassifikation (IPC):
**F16K 7/12** *(2006.01)*     **F16K 7/16** *(2006.01)*

(52) Gemeinsame Patentklassifikation (CPC):
**F16K 7/16; F16K 7/12**

(54) **MEMBRAN FÜR EIN MEMBRANVENTIL**

MEMBRANE FOR A DIAPHRAGM VALVE

MEMBRANE POUR UNE SOUPAPE À MEMBRANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2017  DE 102017128996**

(43) Veröffentlichungstag der Anmeldung:
**12.06.2019  Patentblatt 2019/24**

(73) Patentinhaber: **GEMÜ Gebr. Müller Apparatebau GmbH & Co. Kommanditgesellschaft**
**74653 Ingelfingen (DE)**

(72) Erfinder:
• **Müller, Fritz**
**74676 Niedernhall (DE)**

• **Mayer, Peter**
**74523 Schwäbisch Hall (DE)**
• **Oettinger, Nicole**
**74653 Künzelsau (DE)**
• **Nuzzaci, Bruno**
**6700 STRASSBURG (FR)**

(74) Vertreter: **DREISS Patentanwälte PartG mbB**
**Postfach 10 37 62**
**70032 Stuttgart (DE)**

(56) Entgegenhaltungen:
**EP-A1- 3 203 124      GB-A- 2 399 616**
**JP-A- 2009 002 442    US-A- 2 918 089**
**US-A- 4 231 287       US-A1- 2006 162 547**

Processed by Luminess, 75001 PARIS (FR)

**Beschreibung**

Die Erfindung betrifft eine Membran für ein Membranventil.

Eine Membran gemäß dem Oberbegriff von Anspruch 1 ist bereits aus US 2006/162547 A1 bekannt. Aus der DE 10 2011 084 075 A1 ist ein Membranventil bekannt, bei dem die mechanische Abdichtung für ein fluides Medium nach außen hin eine Klemmung oder Quetschung ist.

Die GB 2 399 616 A, die EP 3 203 124 A1 offenbaren Membrane mit einem jeweiligen Verstärkungselement.

Des Weiteren ist bekannt, dass bei Prozessen, bei denen es auf Reinheit ankommt, die beteiligten Membranventile in den fluidführenden Bereichen also insbesondere die Membrane selbst sterilisiert werden müssen. Die hohe Temperatur beispielsweise von über 150 °C und der Dampf führen dazu, dass die Membran einem Materialstress ausgesetzt ist. Dieser Materialstress kann zu einer verringerten Elastizität führen, was sich nachteilig auf die Dichtheit der Membran nach außen auswirkt.

Das der Erfindung zu Grunde liegende Problem wird durch eine Membran nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung ist in Anspruch 1 definiert. Durch den kleineren zweiten Druckverformungsrest wird die Verklemmung des zweiten Abschnitts zwischen Ventilkörper und Zwischenstück bzw. zwischen Ventilkörper und Antriebsgehäuse verbessert. Durch einen radial nach innen gewandten Materialfluss würden sich ungewollte Materialanhäufungen ergeben, welche bei der Bewegung der Membran zu einer Faltenbildung, Rissen und damit zu einer Beschädigung der Membran führen. Durch die vorgeschlagene Ausbildung der Membran werden die ungewollten Materialanhäufungen im radial nach innen angeordneten Funktionsabschnitt bzw. dem ersten Bereich verhindert bzw. stark reduziert. Ein Wegfließen des Materials aufgrund einer Druckbeanspruchung bei der Verklemmung wird verringert.

Dies ermöglicht es auch, eine vergleichsweise dünne Membran herzustellen.

Darüber hinaus wirkt sich der reduzierte Materialfluss positiv auf die Lebensdauer der Membran aus, da der zweite Bereich aufgrund des kleineren Druckverformungsrests die Dichtwirkung länger aufrechterhält. Auf der anderen Seite wird die Beweglichkeit des ersten inneren Bereichs aufgrund des größeren ersten Druckverformungsrests verbessert. Die Flexibilität und Beweglichkeit des inneren ersten Bereichs ist gegenüber dem zweiten Bereich erhöht, womit über viele Aktuierungsvorgänge ein energiesparendes Öffnen und Schließen eines Fluidkanals mittels der Membran erreicht wird. Folglich wirkt sich der im ersten Bereich verringerte Druckverformungsrest positiv auf die Lebensdauer der Membran aus.

Eine vorteilhafte Ausführungsform kennzeichnet sich dadurch aus, dass der erste und der zweite Druckverformungsrest sich um zumindest 10 %, insbesondere um zumindest 20 % unterscheiden.

Eine vorteilhafte Ausführungsform kennzeichnet sich dadurch aus, dass eine erste Shorehärte des ersten Bereichs der Membran kleiner ist als eine zweite Shorehärte des zweiten Bereichs der Membran. Folglich ist der zweite Bereich härter ausgebildet als der erste Bereich. Die Lebensdauer des zweiten Bereichs wird auch unter dauerhaft starken Klemmkräften verlängert.

Eine vorteilhafte Ausführungsform kennzeichnet sich dadurch aus, dass der erste Bereich eine medium-seitige erste Schicht, eine dem Medium abgewandte zweite Schicht, und eine zwischen der ersten und der zweiten Schicht angeordnete Zwischenschicht umfasst, wobei die Zwischenschicht einen Druckverformungsrest aufweist, welcher größer ist als der zweite Druckverformungsrest. Die so ausgestaltete Zwischenschicht erhöht vorteilhaft die Flexibilität des ersten Bereichs.

Eine vorteilhafte Ausführungsform kennzeichnet sich dadurch aus, dass der Druckverformungsrest der Zwischenschicht größer ist als ein Druckverformungsrest der ersten und/oder zweiten Schicht. Vorteilhaft bilden die erste und die zweite Schicht einen Schutz für die umschlossene Zwischenschicht aus. Auf der anderen Seite wird die Membran nach innen hin vorteilhaft flexibler.

Eine vorteilhafte Ausführungsform kennzeichnet sich dadurch aus, dass der Druckverformungsrest der ersten und/oder zweiten Schicht größer ist als der zweite Druckverformungsrest. Damit wird vorteilhaft erreicht, dass die radial nach innen nötige Flexibilität der Membran und die sichere Klemmwirkung nach außen hin über die Lebensdauer der Membran erhalten bleibt.

Eine vorteilhafte Ausführungsform kennzeichnet sich dadurch aus, dass sich zwischen dem ersten und dem zweiten Bereich eine ringförmige Materialverjüngung befindet. Durch die Materialverjüngung wird die Beweglichkeit des ersten Bereichs verbessert.

Eine vorteilhafte Ausführungsform kennzeichnet sich dadurch aus, dass sich zwischen dem ersten und dem zweiten Bereich der Membran eine ringförmige Nut befindet, welche sich zu einer Trockenseite der Membran hin öffnet. Die auf der Trockenseite angeordnete Nut verhindert - im Vergleich zu einer auf der Mediumseite angeordneten Nut - einen Schmutzeintrag im Bereich der Mediumseite.

Eine vorteilhafte Ausführungsform bezieht sich auf die Membran mit einem Ring, wobei ein erster Bereich des Ringes in die Nut einbringbar ist. Ein Verfließen des Materials des zweiten Bereichs nach innen wird begrenzt, womit die Funktion der Membran - sowohl was die Dichtwirkung des zweiten Bereichs als auch was die Flexibilität des ersten Bereichs angeht - möglichst lang und sicher aufrechterhalten wird.

Eine vorteilhafte Ausführungsform kennzeichnet sich dadurch aus, dass ein zweiter Bereich des Rings den zweiten Bereich der Membran abschnittsweise überdeckt, wobei der zweite Bereich des Ringes auf der dem zweiten Bereich der Membran gegenüberliegenden Seite eine Anlagefläche bereitstellt.

Die Klemmwirkung wird so verbessert, da der zweite Bereich des Rings auf den zweiten Bereich der Membran drückt.

Gemäß einem weiteren Aspekt wird eine Membran für ein Membranventil mit einem Elastomerabschnitt vorgeschlagen. Dieser Elastomerabschnitt umfasst eine zu einer Trockenseite sich öffnende, ringförmige Ausnehmung.

Vorteilhaft wird durch die ringförmige Ausnehmung ein radial innerer Bereich von einem radial äußeren Bereich insoweit getrennt, als dass ein Materialfluss nach innen durch die Ausnehmung begrenzt wird. Insbesondere ergibt sich eine funktionale Entkopplung, wobei der radial innere Bereich funktional einer Rundmembran entspricht.

Eine vorteilhafte Ausführungsform zeichnet sich dadurch aus, dass der Elastomerabschnitt umfasst: Einen nach innen gewandten ersten Bereich; und einen den ersten Bereich lateral umschließenden zweiten Bereich, wobei die Ausnehmung zumindest teilweise in dem zweiten Bereich ausgeführt ist.

In einer vorteilhaften Ausführungsform der Membran ist ein Ring vorgesehen, wobei der Ring in die Ausnehmung eingreift. Vorteilhaft dient der Ring zu einer Begrenzung des Materialflusses radial nach innen.

Gemäß einem weiteren Aspekt wird ein Membranventil bereitgestellt, welches die Membran nach einem der vorstehenden Aspekte umfasst. Der zweite Bereich der Membran ist zwischen einem Ventilkörper und einem Zwischenstück oder zwischen dem Ventilkörper und einem Antriebsgehäuse verklemmt, wobei der erste Bereich mit einem Antrieb mechanisch gekoppelt ist.

Weitere Merkmale und Vorteile sind in den Ausführungsformen der nachfolgenden Zeichnung beschrieben. In der Zeichnung zeigen:

| | |
|---|---|
| Figur 1 | ein Membranventil in perspektivischer Ansicht; |
| Figuren 2, 3, 6 und 7 | jeweils eine Membran in einem schematischen Schnitt; |
| Figur 4 | die Membran in einer Ausführungsform in perspektivischer Ansicht; und |
| Figur 5 | einen Ring in einer Schnittansicht. |

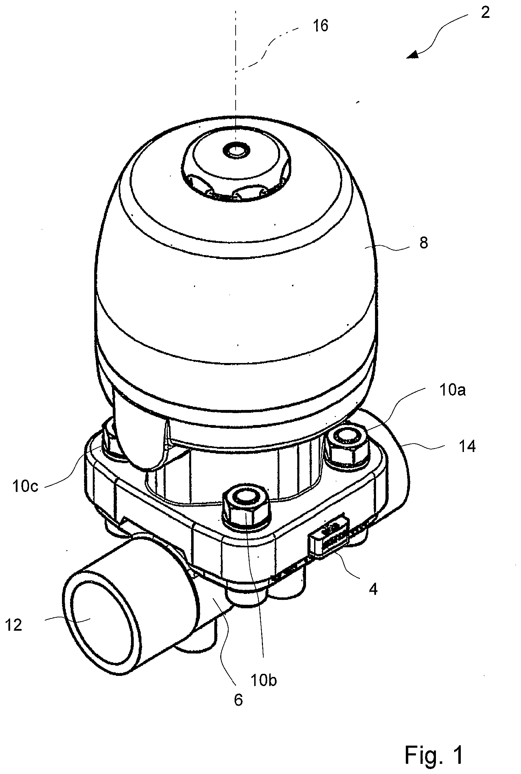

Figur 1 zeigt ein Membranventil 2 in perspektivischer Ansicht. Das Membranventil 2 umfasst eine Membran 4, von der nur eine Lasche zu sehen ist. Mit einem zweiten Bereich, der auch als Spannbereich bezeichnet werden kann, ist die Membran 4 zwischen einem Ventilkörper 6 und einem Antriebsgehäuse 8 oder zwischen dem Ventilkörper 6 und einem Zwischenstück verspannt. Schraube-Mutter-Verbindungen 10a, 10b, 10c drücken das Antriebsgehäuse 8 auf den Ventilkörper 6, um die Membran 4 zu verspannen.

Selbstverständlich sind auch andere Verspannmöglichkeiten als die Schraube-Mutter-Verbindungen 10 denkbar.

Ein erster innen liegender Bereich der Membran 4 ist mit einem im Antriebgehäuse 8 angeordneten Antrieb mechanisch gekoppelt. Durch Bewegung des ersten Bereichs entlang einer Zustellachse 16 auf einen Ventilsitz zu oder von dem Ventilsitz weg schließt oder öffnet der erste Bereich einen Fluidkanal zwischen den beiden Öffnungen 12 und 14 des Ventilkörpers 6.

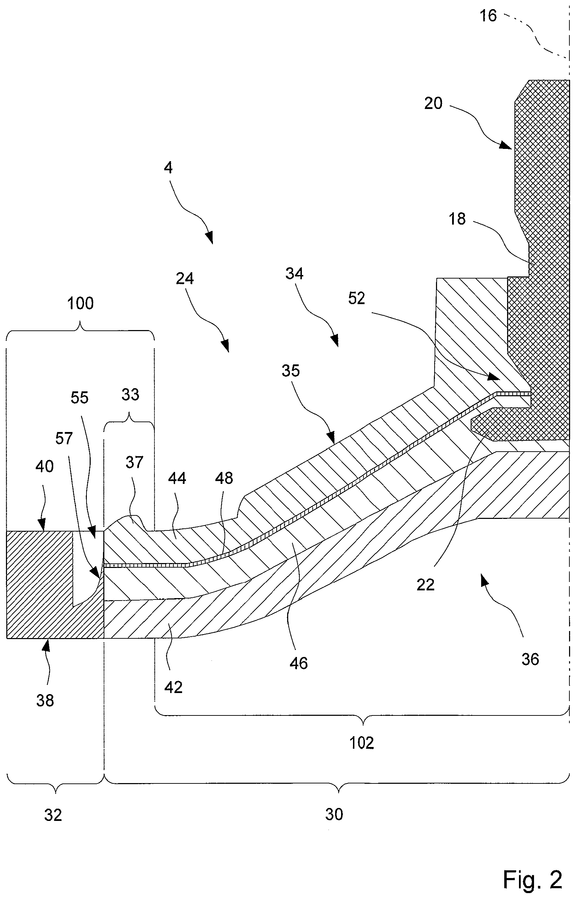

Figur 2 zeigt die Membran 4 in einem schematischen Schnitt. Die Membran 4 ist radial nach innen hin im Wesentlichen rotationssymmetrisch um die Zustellachse 16 ausgebildet und umfasst einen Pin 18 zur Befestigung der Membran 4 an einem Antriebselement wie beispielsweise einer Antriebsspindel. Der Pin 18 ragt auf einer Trockenseite 34 entlang der Zustellachse 16 von der Membran 4 ab. Hierzu weist der Pin 18 ein distales Außengewinde 20 auf. Ein proximaler tellerförmiger Abschnitt ist in einem Elastomerabschnitt 24 der Membran 4 angeordnet.

Der Elastomerabschnitt 24 umfasst: den nach innen gewandten ersten Bereich 30, welcher auch als erster Abschnitt bezeichenbar ist, und den den ersten Bereich 30 lateral umschließenden zweiten Bereich 32, welcher auch als zweiter Abschnitt bezeichenbar ist. Der erste Bereich 30 wird auf einer Mediumseite 36 auf den Ventilsitz des Ventilkörpers gedrückt, um so den Fluidkanal zu verschließen. Der erste Bereich 30 wird hierzu auf der Trockenseite 34 von einem Druckstück mit einem Druck in Richtung Dichtsteg des Ventilkörpers beaufschlagt. Hierzu liegt das Druckstück an einer Anlagefläche 35 an der Trockenseite 34 an. An dem ersten Bereich 30 greift somit der Antrieb an und bewegt den ersten Bereich 30 entlang der Zustellachse 16 zum Schließen und Öffnen des Membranventils.

Ein Klemmabschnitt 100 dient zur Verklemmung der Membran zwischen dem Ventilkörper und einem Antriebskörper bzw. Zwischenstück. Der Klemmabschnitt 100 umfasst den zweiten Bereich 32 sowie einen sich radial nach innen an den zweiten Bereich 32 anschließenden ringförmigen dritten Bereich 33, welcher Teil des ersten Bereichs 30 ist. Der Klemmabschnitt 100 umfasst eine Medium-seitige erste Klemmfläche 38 und eine der ersten Klemmfläche 38 gegenüberliegende, auf der Trockenseite 34 angeordnete zweite Klemmfläche 40. Der dritte Bereich 33 umfasst eine ringförmige Schulter 37. Zwischen der Schulter 37 und der Klemmfläche 30 ist eine ringförmige Ausnehmung 55 in dem zweiten Bereich 32 angeordnet, welche sich zur Trockenseite 34 hin öffnet. Die radial nach innen gewandte Wandung 57 grenzt an den ersten Bereich 30 an. Die Ausnehmung 55 ist auch als Graben bezeichenbar. An den Klemmabschnitt 100 schließt sich radial nach innen ein Funktionsabschnitt 102 an, welcher auch als Walkabschnitt bezeichnet werden kann. Der Funktionsabschnitt 102 ist Teil des ersten Bereichs 30.

Die erste Klemmfläche 38 liegt auf der Mediumseite 36 der Membran 4 an dem Ventilkörper an und stellt somit eine ringförmige Dichtkante bereit. Die zweite Klemmfläche 40 liegt an dem Zwischenstück oder an dem Antriebgehäuse an. Der verklemmte Klemmabschnitt 100 sorgt dafür, dass das Medium bzw. das Prozessfluid, welches das Membranventil durchfließt, nicht zwischen dem zweiten Bereich 32 und dem Ventilkörper nach außen austritt. Der verklemmte zweite Bereich 32 erhöht gegenüber dem radial inneren dritten Bereich 33 die Dichtwirkung nach außen. Des Weiteren stellt die Ausnehmung 55 eine Barriere für einen Materialfluss nach radial innen bereit bzw. begrenzt diesen.

Der erste Bereich 30 weist einen ersten Druckverformungsrest auf. Der zweite Bereich 32 weist einen zweiten Druckverformungsrest auf, welcher kleiner ist als der erste Druckverformungsrest. Nach der Entlastung und einem Rückfließen aufgrund von Eigenspannungen bleibt der eventuell merkliche, materialabhängige Druckverformungsrest. Der Druckverformungsrest wird nach DIN ISO 815 und/oder DIN ISO 2285 und/oder ASTM D 395 bestimmt. Der Druckverformungsrest ist eine Materialeigenschaft des jeweiligen Materials des ersten und zweite Bereichs 30, 32 bzw. einer Materialschicht. Da fabrikneue Membrane 4 härter sind als bereits dynamisch im Betrieb beanspruchte, bezieht sich der erste und zweite Druckverformungsrest auf den Auslieferungszustand der Membran 4. Der erste Druckverformungsrest des ersten Bereichs 30 unterscheidet sich um zumindest 10 %, insbesondere um zumindest 20 % von dem zweiten Druckverformungsrest des zweiten Bereichs 32.

Der erste Bereich 30 weist insbesondere ein erstes Elastomermaterial mit dem ersten Druckverformungsrest auf. Der zweite Bereich 32 weist insbesondere ein zweites Elastomermaterial mit dem zweiten Druckverformungsrest auf, welcher kleiner ist als der erste Druckverformungsrest.

Der Druckverformungsrest kann auch folgendermaßen bestimmt werden: Man entnimmt aus dem ersten Bereich 30 eine erste Materialprobe und aus dem zweiten Bereich 32 eine zweite Materialprobe, wobei beide Materialproben die im Wesentlichen gleiche Dimension und Form, beispielsweise eine Würfelform, aufweisen. Die Stärken H1_A, H2_A der beiden entnommenen Materialproben werden ermittelt. Anschließend werden beide Materialproben in einem Ofen bei beispielsweise 150 °C 24 Stunden lang von zwei sich gegenüberliegenden Seiten mit Druck auf beaufschlagt und auf eine Stärke H1_B, H2_B zusammengepresst. Anschließend werden die Materialproben auf Zimmertemperatur abgekühlt und im entspannten, abgekühlten Zustand wird eine Stärke H1_C, H2_C der jeweiligen Materialprobe ermittelt. Für den ersten Abschnitt der Membran ergibt sich der Druckverformungsrest D1 nach Gleichung (1) in Prozent. Für den zweiten Abschnitt der Membran ergibt sich der Druckverformungsrest D2 nach Gleichung (2) in Prozent.

$$D1 = 100 * (H1\_A - H1\_C) / (H1\_A - H1\_B) \qquad (1)$$

$$D2 = 100 * (H2\_A - H2\_C) / (H2\_A - H2\_B) \qquad (2)$$

Der erste Bereich 30 weist eine erste Shorehärte auf, welche kleiner ist als eine zweite Shorehärte des zweiten Bereichs 32 der Membran 4. Bevorzugt ist die erste Shorehärte des ersten Bereichs 30 kleiner 80 Shore und die zweite Shorehärte des zweiten Bereichs 32 größer oder gleich 80 Shore.

Die jeweilige erste und zweite Shorehärte ist eine Shore-A-Härte oder Shore-D-Härte gemäß DIN EN ISO 868 und/oder DIN ISO 7619-1) unter der Bedingung 23 °C, ein Härtegrad nach dem internationalen Gummihärtegrad IRHD nach ISO48 oder ein Shore-A-Härte nach DIN 53 505. Da fabrikneue Membrane härter sind als bereits dynamisch im Betrieb beanspruchte, bezieht sich die erste und zweite Shorehärte auf den Auslieferungszustand.

Der erste Bereich 30 umfasst einen Schichtaufbau umfassend eine medium-seitige erste Schicht 42, eine zur Trockenseite 34 gewandte zweite Schicht 44, und eine zwischen der ersten und der zweiten Schicht 42, 44 angeordnete Zwischenschicht 46. Zwischen der Zwischenschicht 46 und der zweiten Schicht 44 ist ein Stützgewebe 48 angeordnet, welches in eine ringförmige Ausnehmung 52 des Pins 18 hineinragt und die Membran 4 verstärkt. Ein distaler tellerförmiger Abschnitt 22 des Pins 18 befindet sich in der Zwischenschicht 46. Der Pin 18 ist in den ersten Bereich 30 einvulkanisiert. Selbstverständlich können die Grenzen zwischen den Bereichen 30, 32 sowie zwischen den Schichten 42, 44, 46 unterschiedlich gewählt sein als dargestellt. In einer alternativen Ausführungsform umfasst der erste Bereich 30 keinen Schichtaufbau.

Die Zwischenschicht 46 weist einen Druckverformungsrest auf, welcher größer ist als der zweite Druckverformungsrest des zweiten Bereichs 32. Der Druckverformungsrest der Zwischenschicht 46 ist größer als ein Druckverformungsrest der ersten und/oder zweiten Schicht 42, 44. Der Druckverformungsrest der ersten und/oder zweiten Schicht 42, 44 ist größer als der zweite Druckverformungsrest des zweiten Bereichs 32.

Selbstverständlich kann anstatt der Druckverformungsreste oder zusätzlich auch der Zugverformungsrest bestimmt werden. Hierbei ist ein erster Zugverformungsrest des ersten Bereichs 30 größer als ein zweiter Zugverformungsrest des zweiten Bereichs 32. Ein Zugverformungsrest der Zwischenschicht 46 ist größer als ein Zugverformungsrest der medium-seitigen Schicht 42 und größer als ein Zugverformungsrest einer dem Medium abgewandten Schicht 44.

Der Elastomerabschnitt 24, also der zweite Bereich 32 und die Schichten 42, 44, 48 des ersten Bereichs 30 umfassen beispielsweise zumindest eines der folgenden Materialien: Ethylen-Propylen-Dien-Kautschuk (EPDM), Butylkautschuk (Isobutylen, Isoprene Rubber, IIR), Naturkautschuk (NR), Epichlorhydrin-Kautschuk (ECO), Chlorsulfonyl-PolyethylenKautschuk (CSM), Acrylat-Kautschuk (ACM).

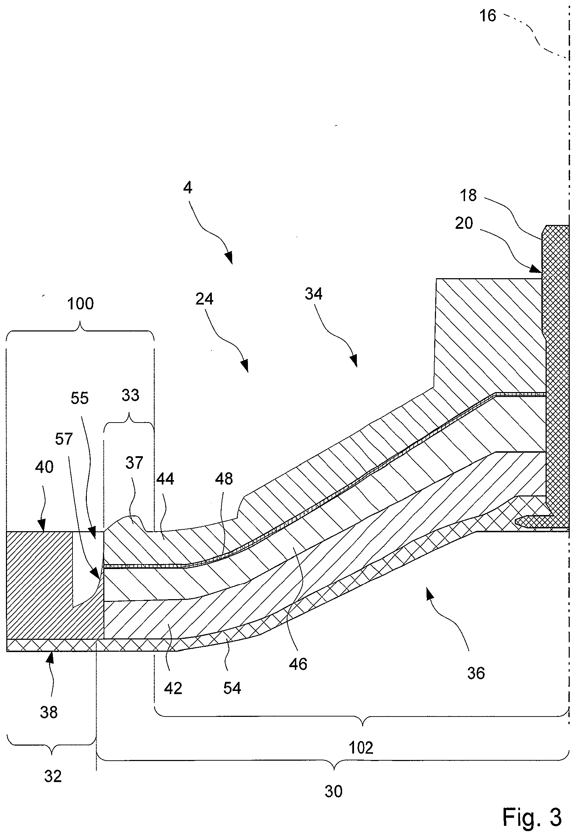

Figur 3 zeigt eine weitere Ausführungsform der Membran 4 in einem schematischen Schnitt. Im Unterschied zur Figur 2 umfasst die Membran 4 ein Membranschild 54, beispielsweise aus Polytetrafluorethylen, PTFE. In das Membranschild 54 ist der Pin 18 eingesintert und raft durch den Elastomerabschnitt hindurch von der Trockenseite 34 ab.

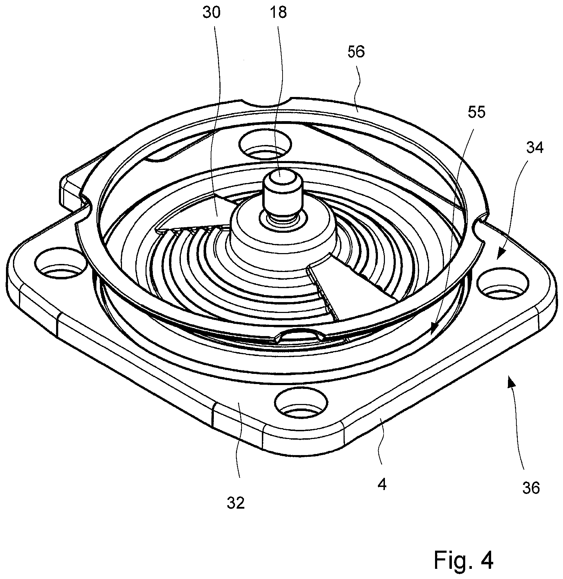

Figur 4 zeigt die Membran 4 in einer Ausführungsform in perspektivischer Ansicht. Zwischen dem ersten und zweiten Bereich 30, 32 ist auf der Trockenseite 34 die ringförmige Ausnehmung 55 ausgebildet, die mit einer Materialverjüngung einhergeht. Ein zu der Ausnehmung 55 korrespondierender Ring 56 ist abschnittweise in die Ausnehmung 55 einbringbar. Die Mediumseite 36 der Membran 4 ist bevorzugt rücksprungfrei, d. h. insbesondere ohne Nuten, und damit glatt ausgebildet. Die Mediumseite 36 kann allerdings ringförmige Vorsprünge aufweisen.

Alternativ zu dem Ring 56 weist ein Flanschabschnitt des Zwischenstücks oder des Antriebsgehäuses eine Teilkontur des Ringes auf und greift in die Ausnehmung 55 ein.

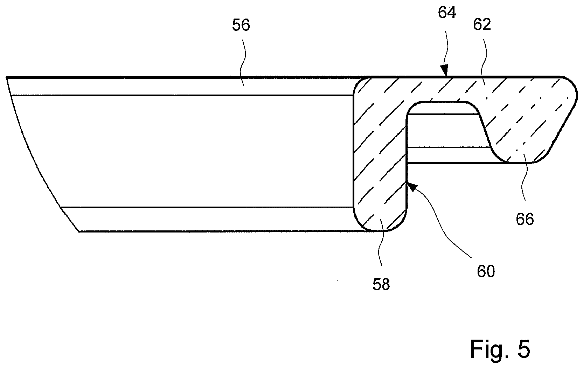

Figur 5 zeigt den Ring 56 für die Membran in einer schematischen Schnittansicht. Ein erster Bereich 58 des Ringes 56 ist in die trockenseitige Nut der Membran einbringbar. Eine radial nach außen gewandte Fläche 60 des Rings 56 liegt an dem zweiten Bereich der Membran an und verhindert ein Fließen des Elastomermaterials im zweiten Bereich der Membran nach innen.

Ein radial nach außen ragender zweiter Bereich 62 überdeckt den zweiten Bereich der Membran zumindest abschnittsweise. Der zweite Bereich 62 des Ringes 56 stellt auf der dem zweiten Bereich der Membran gegenüberliegenden Seite eine Anlagefläche 64 bereit. Die Anlagefläche 64 dient zur Anlage des Zwischenstücks bzw. des Antriebsgehäuses. Der Anlagefläche 64 gegenüberliegend ist eine ringförmige Nase 66 angeformt, welche bei Druckbelastung ausgehend von dem Zwischenstück bzw. dem Antriebgehäuse in den zweiten Bereich der Membran eingedrückt wird und so die Verklemmung der Membran sicherstellt.

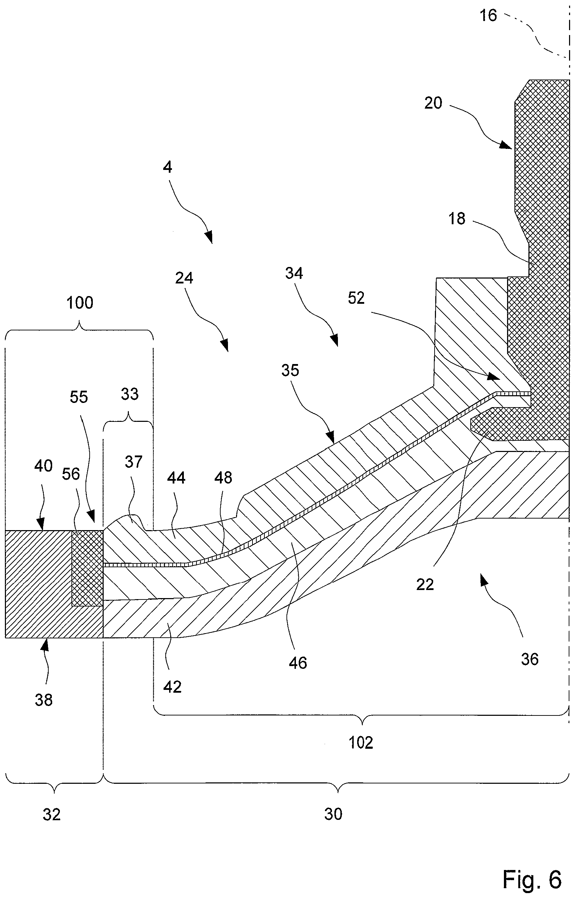

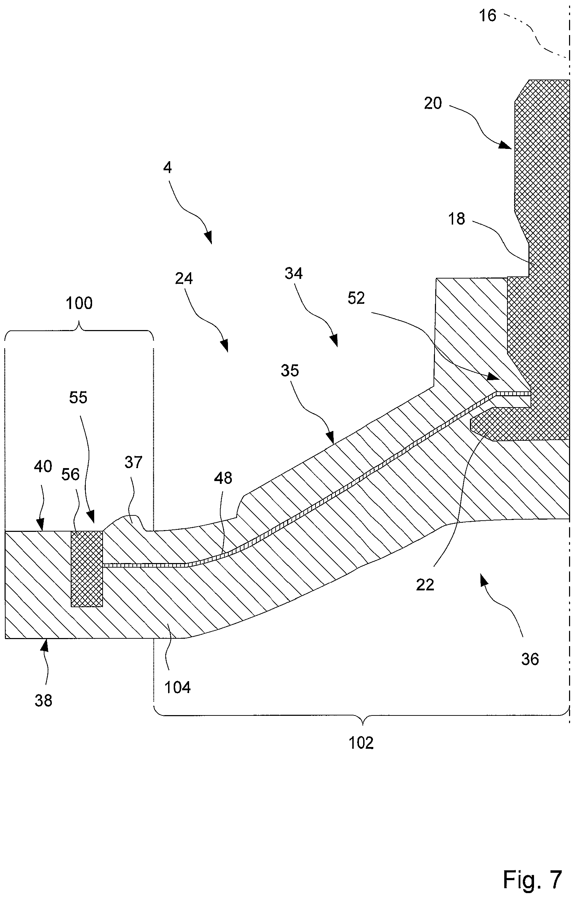

Figur 6 zeigt in schematischer Form eine Ausführungsform der Membran 4 mit dem Elastomerabschnitt 24. Der Elastomerabschnitt 24 umfasst die ringförmige Ausnehmung 55, in welche der Ring 56, welcher bevorzugt aus einem Metall bzw. einer Metalllegierung gefertigt ist, eingreift. Der Ring 56 ist parallel zur Zustellachse 16 größer dimensioniert als lotrecht zur Zustellachse 16, wodurch sich zum einen die Materialschranke als auch eine verringerte zur Trockenseite 34 hin exponierte Kontaktfläche ergibt. Bevorzugt schließt der Ring 56 zur Trockenseite 34 hin im Wesentlichen bündig mit der Klemmfläche 40 ab. Selbstverständlich kann die Membran 4 auch ohne den Ring 56 betrieben werden. Zu den weiteren Merkmalen wird auf die Beschreibung der Figur 2 verwiesen. Figur 7 zeigt in schematischer Form eine Ausführungsform der Membran 4 mit dem Elastomerabschnitt 24. Der Elastomerabschnitt 24 ist durchgängig aus einem Elastomermaterial mit im wesentlichen gleichem Druckverformungsrest. In der ringförmigen Ausnehmung 55, welche im Klemmabschnitt 100 angeordnet ist, ist der Ring 56 eingebracht. Zu den weiteren Merkmalen wird auf die Beschreibung der Figur 2 verwiesen.

**Patentansprüche**

**1.** Eine Membran (4) für ein Membranventil (2), wobei die Membran (4) einen Elastomerabschnitt (24) umfasst, der

- einen nach innen gewandten ersten Bereich (30), welcher ein erstes Elastomermaterial mit einem ersten materialabhängigen Druckverformungsrest aufweist, und
- einen Klemmabschnitt (100) mit einem zweiten Bereich (32) und einem dritten Bereich (33) umfasst, wobei der Klemmabschnitt (100) zur Verklemmung der Membran zwischen einem Ventilkörper und einem Antriebskörper dient;

wobei sich dem zweiten Bereich (32) der ringförmige dritte Bereich (33) radial nach innen anschließt, der Teil des ersten Bereichs (30) ist;
**dadurch gekennzeichnet,**
**dass** der Elastomerabschnitt (24) den den ersten Bereich (30) lateral umschließenden zweiten Bereich (32) umfasst, welcher ein zweites Elastomermaterial mit einem zweiten materialabhängigen Druckverformungsrest aufweist, welcher kleiner ist als der erste Druckverformungsrest.

2. Die Membran (4) nach dem Anspruch 1, wobei der erste und der zweite Druckverformungsrest sich um zumindest 10 %, insbesondere um zumindest 20 % unterscheiden.

3. Die Membran (4) nach einem der vorstehenden Ansprüche, wobei eine erste Shorehärte des ersten Bereichs (30) der Membran (4) kleiner ist als eine zweite Shorehärte des zweiten Bereichs (32) der Membran (4).

4. Die Membran (4) nach einem der vorstehenden Ansprüche, wobei der erste Bereich (30) eine medium-seitige erste Schicht(42), eine dem Medium abgewandte zweite Schicht (44), und eine zwischen der ersten und der zweiten Schicht (42, 44) angeordnete Zwischenschicht (46) umfasst, und wobei die Zwischenschicht (46) einen Druckverformungsrest aufweist, welcher größer ist als der zweite Druckverformungsrest.

5. Die Membran (4) nach Anspruch 4, wobei der Druckverformungsrest der Zwischenschicht (46) größer ist als ein Druckverformungsrest der ersten und/oder zweiten Schicht (42, 44).

6. Die Membran (4) nach Anspruch 4 oder 5, wobei der Druckverformungsrest der ersten und/oder zweiten Schicht (42, 44) größer ist als der zweite Druckverformungsrest.

7. Die Membran (4) nach einem der vorstehenden Ansprüche, wobei sich zwischen dem ersten und dem zweiten Bereich (30, 32) eine ringförmige Materialverjüngung befindet.

8. Die Membran (4) nach einem der vorstehenden Ansprüche, wobei sich zwischen dem ersten und dem zweiten Bereich (30, 32) der Membran (4) eine ringförmige Ausnehmung (54) befindet, welche sich zu einer Trockenseite der Membran (4) hin öffnet.

9. Die Membran (4) nach dem Anspruch 8 mit einem Ring (56), wobei ein erster Bereich des Ringes (56) in die Ausnehmung (55) einbringbar ist.

10. Die Membran (4) mit dem Ring nach Anspruch 9, wobei ein zweiter Bereich des Rings (56) den zweiten Bereich (32) der Membran (4) abschnittsweise überdeckt, und wobei der zweite Bereich des Ringes (56) auf der dem zweiten Bereich (32) der Membran (4) gegenüberliegenden Seite eine Anlagefläche bereitstellt.

11. Die Membran (4) gemäß einem der vorigen Ansprüche, wobei die Membran (4) den Elastomerabschnitt (24) umfasst, und wobei der Elastomerabschnitt (24) umfasst:

   - eine zu einer Trockenseite (34) sich öffnende, ringförmige Ausnehmung (55).

12. Die Membran nach dem Anspruch 11, wobei der Elastomerabschnitt (24) umfasst:

   - einen nach innen gewandten ersten Bereich (30); und
   - einen den ersten Bereich (30) lateral umschließenden zweiten Bereich (32), wobei die Ausnehmung (55) zumindest teilweise in dem zweiten Bereich (32) ausgeführt ist.

13. Die Membran nach Anspruch 11 oder 12 mit einem Ring (56), wobei der Ring (56) in die Ausnehmung (55) eingreift.

14. Ein Membranventil (2) umfassend die Membran (4) nach einem der vorstehenden Ansprüche, wobei der zweite Bereich der Membran (4) zwischen einem Ventilkörper und einem Zwischenstück oder zwischen dem Ventilkörper und einem Antriebsgehäuse verklemmt ist, und wobei der erste Bereich mit einem Antrieb mechanisch gekoppelt ist.


**Claims**

1. A diagphragm (4) for a diagphragm valve (2), the diagphragm (4) comprising an elastomer portion (24) which

   - has an inwardly facing first region (30), which has a first elastomer material with a first material-dependent compression set, and

- has a clamping portion (100) with a second region (32) and a third region (33),

the clamping portion (100) being used to clamp the diagphragm between a valve body and a drive body;
the second region (32) being adjoined radially inward by the annular third region (33), which is part of the first region (30)
**characterized in that** the elastomer portion (24) comprises the second region (32) laterally surrounding the first region (30), which second region has a second elastomer material with a second material-dependent compression set which is smaller than the first compression set.

2. The diagphragm (4) according to claim 1, wherein the first and the second compression set differ by at least 10%, in particular by at least 20%.

3. The diagphragm (4) according to either of the preceding claims, wherein a first Shore hardness of the first region (30) of the diagphragm (4) is smaller than a second Shore hardness of the second region (32) of the diagphragm (4).

4. The diagphragm (4) according to any of the preceding claims, wherein the first region (30) comprises a medium-side first layer (42), a second layer (44) remote from the medium, and an intermediate layer (46) arranged between the first and the second layer (42, 44), and wherein the intermediate layer (46) has a compression set which is greater than the second compression set.

5. The diagphragm (4) according to claim 4, wherein the compression set of the intermediate layer (46) is greater than a compression set of the first and/or second layer (42, 44).

6. The diagphragm (4) according to claim 4 or claim 5, wherein the compression set of the first and/or second layer (42, 44) is greater than the second compression set.

7. The diagphragm (4) according to any of the preceding claims, wherein an annular material taper is located between the first and the second region (30, 32).

8. The diagphragm (4) according to any of the preceding claims, wherein an annular recess (54) is located between the first and the second region (30, 32) of the diagphragm (4), which annular recess opens toward a dry side of the diagphragm (4).

9. The diagphragm (4) according to claim 8 having a ring (56), wherein a first region of the ring (56) can be introduced into the recess (55).

10. The diagphragm (4) having the ring according to claim 9, wherein a second region of the ring (56) covers the second region (32) of the diagphragm (4) in portions, and wherein the second region of the ring (56) provides a contact surface on the side opposite the second region (32) of the diagphragm (4).

11. The diagphragm (4) according to any of the preceding claims, wherein the diagphragm (4) comprises the elastomer portion (24), and wherein the elastomer portion (24) comprises:

- a annular recess (55) which opens toward a dry side (34).

12. The diagphragm according to claim 11, wherein the elastomer portion (24) comprises:

- an inwardly facing first region (30); and
- a second region (32) laterally surrounding the first region (30), wherein the recess (55) is formed at least in part in the second region (32).

13. The diagphragm according to claim 11 or 12 having a ring (56), wherein the ring (56) engages in the recess (55).

14. A diagphragm valve (2) comprising the diagphragm (4) according to any of the preceding claims, wherein the second region of the diagphragm (4) is clamped between a valve body and an intermediate piece or between the valve body and a drive housing, and wherein the first region is mechanically coupled to a drive.

**Revendications**

1. Membrane (4) pour une vanne à membrane (2), dans laquelle la membrane (4) comprend une section en élastomère (24), qui comprend

   - une première zone (30) orientée vers l'intérieur qui présente un premier matériau élastomère avec une première déformation rémanente à la compression dépendant du matériau, et
   - une section de serrage (100) avec une deuxième zone (32) et une troisième zone (33),

      dans laquelle la section de serrage (100) sert à serrer la membrane entre un corps de vanne et un corps d'entraînement;
      dans laquelle la troisième zone annulaire (33) qui fait partie de la première zone (30) est adjacente radialement vers l'intérieur à la deuxième zone (32),
      **caractérisée par le fait**
      **que** la section en élastomère (24) comprend la deuxième zone (32) qui entoure latéralement la première zone (30) et qui présente un deuxième matériau élastomère avec une deuxième déformation rémanente à la compression dépendant du matériau qui est inférieure à la première déformation rémanente à la compression.

2. Membrane (4) selon la revendication 1, dans laquelle que les première et deuxième déformations rémanentes à la compression diffèrent d'au moins 10 %, en particulier d'au moins 20 %.

3. Membrane (4) selon l'une quelconque des revendications précédentes, dans laquelle une première dureté Shore de la première zone (30) de la membrane (4) est inférieure à une deuxième dureté Shore de la deuxième zone (32) de la membrane. (4).

4. Membrane (4) selon l'une quelconque des revendications précédentes, dans laquelle la première zone (30) comprend une première couche côté milieu (42), une deuxième couche (44) montrant dans la direction opposée au milieu, et une couche intermédiaire (46) disposée entre les première et deuxième couches (42, 44), et dans laquelle la couche intermédiaire (46) présente une déformation rémanente à la compression qui est supérieure à la deuxième déformation rémanente à la compression.

5. Membrane (4) selon la revendication 4, dans laquelle la déformation rémanente à la compression de la couche intermédiaire (46) est supérieure à une déformation rémanente à la compression de la première et/ou de la deuxième couche (42, 44).

6. Membrane (4) selon la revendication 4 ou 5, dans laquelle la déformation rémanente à la compression de la première et/ou de la deuxième couche (42, 44) est supérieure à la deuxième déformation rémanente à la compression

7. Membrane (4) selon l'une quelconque des revendications précédentes, dans laquelle il existe un rétrécissement annulaire de matériau entre les première et deuxième zones (30, 32).

8. Membrane (4) selon l'une quelconque des revendications précédentes, dans laquelle il y a un évidement annulaire (54) entre les première et deuxième zones (30, 32) de la membrane (4), qui s'ouvre vers un côté sec de la membrane (4).

9. Membrane (4) selon la revendication 8, comprenant un anneau (56), dans laquelle une première zone de l'anneau (56) peut être insérée dans l'évidement (55).

10. Membrane (4) comprenant l'anneau selon la revendication 9, dans laquelle une deuxième zone de l'anneau (56) recouvre par sections la deuxième zone (32) de la membrane (4), et dans laquelle la deuxième zone de l'anneau (56) fournit une surface d'appui sur le côté situé en regard de la deuxième zone (32) de la membrane (4).

11. Membrane (4) selon l'une quelconque des revendications précédentes, dans laquelle la membrane (4) comprend la section en élastomère (24), et dans laquelle la section en élastomère (24) comprend:

   - un évidement annulaire (55) qui s'ouvre vers un côté sec (34).

**12.** Membrane selon la revendication 11, dans laquelle la section en élastomère (24) comprend:

- une première zone (30) orientée vers l'intérieur; et
- une deuxième zone (32) entourant latéralement la première zone (30), dans laquelle l'évidement (55) est réalisé au moins en partie dans la deuxième zone (32).

**13.** Membrane selon la revendication 11 ou 12, comprenant un anneau (56), dans laquelle l'anneau (56) s'engage dans l'évidement (55).

**14.** Vanne à membrane (2) comprenant la membrane (4) selon l'une quelconque des revendications précédentes, dans laquelle la deuxième zone de la membrane (4) est serrée entre un corps de vanne et une pièce intermédiaire ou entre le corps de vanne et un boîtier d'entraînement, et dans laquelle la première zone est couplée mécaniquement à un entraînement.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006162547 A1
- DE 102011084075 A1
- GB 2399616 A
- EP 3203124 A1